# EUROPEAN PATENT SPECIFICATION

(11) **EP 0 916 082 B1**
(45) Date of publication and mention of the grant of the patent: **23.08.2000**
(21) Application number: 97926819.0
(22) Date of filing: 27.05.1997
(51) Int. Cl.: G01N 1/30

(54) **METHODS OF PREDICTING DIGESTIBILITY OF FORAGE MATERIAL**
VERFAHREN ZUM VORHERSAGEN DER VERDAULICHKEIT VON FUTTERMATERIALIEN
PROCEDES POUR L'EVALUATION DE LA DIGESTIBILITE DU FOURRAGE

(30) Priority: 31.05.1996 US 656648
(43) Date of publication of application: 19.05.1999
(73) Proprietor: Pioneer Hi-Bred International, Inc., Johnston, Iowa 50131-1000 (US); Kuhbauch, Walter, 53913 Swisttal-Buschhoven (DE)
(72) Inventor: KUHBAUCH, Walter, D-53913 Swisttal-Buschhoven (DE); ROTTGERMANN, Martina, D-53121 Bonn (DE); SAPIENZA, Donald, A., Johnston, IA 50131 (US)
(74) Representative: Goldin, Douglas Michael
(86) International application number: US9709230
(87) International publication number: WO9745715

(56) References cited:
- C. MIGN ET AL.: "Microbial degradation of the apical internode of Co125 and W401 maize in the rumen." ANIMAL FEED SCIENCE TECHNOLOGY, vol. 58, no. 3-4, 1996, pages 165-185, XP002042598
- K. M. WITTENBERG ET AL.: "Use of histochemistry, section-to-slide digestion and image analysis for evaluation of digestibility in reed canarygrass (Phalaris arundinacea L.) genotypes." CANADIAN JOURNAL OF ANIMAL SCIENCE, vol. 74, no. 1, 1994, page 83-89 XP002042599 cited in the application
- BESTAJOVSKY ET AL.: "Schätzung der Verdaulichkeit von Luzernestengeld über Lignin mit Hilfe der quantitativen Bildanalyse. " Z. ACKER- UND PLANZENBAU, vol. 154, 1985, page 112-19 XP002042600 cited in the application
- W. KÜHBAUCH : "Anwendungsmöglichkeiten der quantitativen Bildanalyse mit Echtfarbenekennung in der pflanzenbaulich-botanischen Forschung." ANGEWANDTE BOTANIK , vol. 59, 1985, pages 209-218, XP002042601 cited in the application
- F. M. ENGELS : "Developments in application of light and scanning electron microscopy techniques for cell wall degradation studies." NETHERLANDS JOURNAL OF AGRICULTURAL SCIENCE, vol. 44, no. 4, 1996, pages 357-373, XP002042602

## Description

### FIELD OF THE INVENTION

The present invention relates to methods of evaluating agricultural products which are used for animal feed. Specifically, the present invention relates to methods of evaluating the digestibility of plant stems. Furthermore, the present invention relates to methods of predicting animal performance.

### BACKGROUND OF THE INVENTION

The composition of plant stem material has a strong influence on the feeding quality of major forage crops. Forages contain significant portions of plant cell wall material. From the standpoint of a forage user, the amount and type of plant cell wall is extremely important because it greatly influences how a particular forage will be utilized by animals to produce meat or milk.

A young plant cell has a single outer layer referred to as the primary cell wall. Later, as the plant matures, a second layer, the secondary cell wall, is laid down on the inside of the cell. The secondary wall is thicker and gives the plant cell tensile strength. The main structural components of the primary and secondary cell walls are the complex carbohydrates, cellulose and hemicellulose. In mature plants, the primary cell wall contributes a negligible portion to the total cell wall content. Cell walls make up about 40-80% of the forage.

With advancing maturity, forage cells insert a noncarbohydrate material known as lignin into the primary and secondary walls. The feeding quality of forage typically decreases during the maturity of a plant because of increased proportions of stem material containing a high percentage of cell-wall carbohydrates and lignin. These complex compounds are the primary skeleton of the plant cell, providing additional tensile strength and rigidity. Lignin is important from a nutritional perspective because it is an almost non-digestible substance whose presence inhibits the availability of the cellulose and hemicellulose portions of the forage.

Both the outer and the secondary cell-wall layers of a young plant cell wall could be broken down by the microbial populations within an animal's digestive tract. As lignin is added when the plant matures, the layers are cemented together and they are more difficult to digest.

Plant stem tissue of forage grasses includes an outer epidermal layer, followed by hypodermal sclerenchyma, parenchyma and vascular bundles (including phloem and xylem). Physical structures and chemical constituents in plant stems limit forage degradation and, consequently, the availability of nutrients to an animal. In general, a higher concentration of cell content concentration results in higher nutrient densities and digestibility, as it is in leaves relative to stem material.

Development of feeding strategies and plant breeding programs to improve forage degradation by ruminants may be enhanced using techniques that can characterize the cell-wall structures limiting forage breakdown. It is important for both animal nutritionists and plant breeders to develop forage quality selection techniques that are simple, rapid, accurate and inexpensive. In particular, techniques for forage digestibility evaluation are especially important.

Studies have been conducted in reed canarygrass to obtain histological information about digestibility. See Wittenberg, et. al.; "Use of Histochemistry, Section-to-Slide Digestion and Image Analysis for Evaluation of Digestibility in Reed Canarygrass (Phalaris arundinacea L.) Genotypes"; Canadian Journal of Animal Science; Vol. 74; pp. 83-89; (1994); incorporated herein in its entirety by reference. Histochemistry staining using acid phloroglucinol (AP) or chlorine sulphite (CS) indicated genotype and growth stage differences with the tissues studied except the phloem and xylem. It was concluded that key tissues contributing to differences in digestibility of reed canarygrass stems were the parenchyma and sclerenchyma. However, in poorly digested plant material, there appeared to be a high number of errors associated with the technique. Measurements of tissue total cell-wall contours, (the contour length of the standing cell wall within the thin cuts was measured by image analysis), cell-wall width, stem vascular bundle number and the use of image analysis to compare differences in tissue area between undigested and digested stem cross sections did not successfully identify differences between high- and low-digestibility genotypes. The focus of this study was the percentage area.

Image analysis techniques have also been used to study alfalfa. See Kühbauch; "Applicability of the Quantitative Image Analysis Technique Over True Color Discrimination in Research Areas of Plant Production and Botany"; Angewandte Botanik; Vol. 59; pp. 209-218; (1985); incorporated herein in its entirety by reference. These studies related differences in brightness and spectral characteristics in terms of covered area proportions and intensity of color to quantitate digestibility. After staining with phloroglucinol/HCl, the distribution and concentration of lignin was determined in a stem cross section of alfalfa.

Image analysis was also used to predict the digestibility of alfalfa by Bestajovsky, et al.; "Estimation of the Digestibility of Lucerne Stems at Different Lignin Contents by Means of the Quantitative Image Analysis"; J. Agronomy and Crop Science; Vol. 154; pp. 112-119; (1985); incorporated herein in its entirety by reference. An attempt was made to estimate digestibility of alfalfa at different lignin contents of stem by means of a quantitative image analysis of lignified areas of cross sections of alfalfa stems stained with phloroglucinol/HCl. The focus was on percentage area.

The aforementioned attempts typically used phloroglucinol/HCl to stain lignin or, more specifically, interact with aldehyde groups within the cell wall. The red color produced was related to lignin content in germplasm rich in sclerenchymal tissue. These methods are unsatisfactory to determine forage quality routinely because they are expensive, time consuming, cumbersome and high numbers of errors are associated with them.

Typically, with highly digestible forage materials, the correlation of red color and digestibility has been poor. When digestibility has been low, however, a high degree of correlation results. For forage materials high in parenchymal tissue content, correlation has also been low.

Furthermore, existent methods use lignin quantity as a focal point, a criterion which does not accurately predict digestibility.

Based on the foregoing, there exists a need to provide rapid, inexpensive, efficient and accurate methods for predicting the digestibility of forage.

It is therefore an object of the present invention to provide rapid, inexpensive, efficient and accurate methods of estimating nutrient availability in forage.

It is a further object of the present invention to provide effective methods of predicting the digestibility of forage tissue.

It is a further object of the present invention to provide methods for obtaining accurate histological information about forage stem tissue.

It is a further object of the present invention to provide effective methods for predicting animal performance.

It is a further object of the present invention to provide effective methods for predicting fiber availability of forage stem tissue.

### SUMMARY OF THE INVENTION

In the present invention, methods are provided for quantifying the digestibility of forage stem tissue comprising the steps of:
a) staining a sample of the stem with a stain specific for linkages within the cell wall carbohydrates; and
b) analyzing the stained sample using image analysis to locate sections of the sample producing a brown region and determining the percentage area of brown region to quantify the distribution of complex cell wall carbohydrates in forage.

The digestibility information thus obtained provides valuable information with applications to plant breeding, animal performance and forage quality, enabling a rapid screening of germplasm with a visualization of potential digestibility.

### Brief Description of the Figures

**Figure I.** represents a visualization of the concentric rings of a maize stem after staining with phloroglucinol/HCl.

**Figure II.** represents a visualization of a stained maize stem with an image quantified by the three principal colors, red, green and blue.

**Figure III.** represents a visualization of the brown Ring of Röttgermann (left column) and the associated extent of digestibility after 24 hours in rumen fluid (right column) in mirror sections of maize stems.

### Detailed Description of the Invention

The present invention discloses the unexpected presence of a distinct band of stem tissue composed of small parenchymal cells, just interior to the epidermis and the outer sclerenchymal tissue of the stem, and prior to the large parenchymal cells normally forming the center of the stem. As used herein, the present distinct band is called the "Ring of Röttgermann" or "ROR". The ROR was not differentiated in conventional digestibility studies and has now been identified as a highly digestible pith. It is a highly reliable predictor of digestibility.

The present methods involve the utilization of a stain to colorize cell wall carbohydrate complexes followed by the visual differentiation of the ROR from the total pith. Contrary to prior art, the present methods demonstrate that the distribution of lignin within a plant stem is just as important as the quantity of lignin in the total cell wall. Thus, the cell wall does not have to be completely digested, merely rendered permeable for a plant cell to have added digestibility.

Figure III. demonstrates the above. Mirror sections of the stem are employed in the present invention. As used herein, "mirror section" indicates opposite sides of a single cut at a specific location on the stem. One section is then subjected to in vitro rumen digestion, followed by identification of the cell biomass digested by rumen microorganisms. The contribution of the cell biomass digested to the total stem biomass can then be quantified.

Figure III. contains eight photographs illustrating the concept of the present methods. The left hand column contains photographs of stem sections showing the epidermis and the outer sclerenchymal tissue of the stem, a generally indigestible plant material, the ROR - the newly identified plant cell mass - and the large parenchymal cells, traditionally included with the ROR but not distinguished therefrom, also previously considered the pith.

The right hand column illustrates the mirror sections of the same stem cells after exposure to rumen fluid and then analyzed. The series of photographs begins with a maize germplasm low in digestibility and ends with a highly digestible maize germplasm.

Figure III. illustrates that the rumen microorganisms preferentially digest a specific cell mass which can be visualized and quantified by staining and image analysis. Statistical analysis indicates a high correlation with in vitro and in situ digestibility of the total stem. Further analysis can then quantify the advantage of the ROR in animal rations.

The present invention has applications in agronomy to identify low and highly digestible plant material. Thus, breeders can initially identify potential hybrids for additional detailed analysis. Potential forage can be rapidly screened in the field without the need to prepare samples for laboratory analysis as is currently the practice. The method is available to sales agronomists, forage specialists and field nutritionists to demonstrate features of hybrids advantageous to an animal.

In the present invention, the ROR, appearing as a brown area after staining with phloroglucinol/HCl, is located just interior to the small celled sclerenchymal tissue and just exterior to the large celled parenchymal tissue. The ROR is highly related to tissue high in soluble sugars. While not intending to be a limitation, it is believed that phloroglucinol binds with aldehyde groups in other cell wall constituents such as disaccharides, polysacchardies, hemicellulose and possibly phenolic acids. The brown ring is believed to represent a mixture of natural tissue colour, poorly lignified cell walls and unknown reactions of sugar with the staining solution.

Animal performance is estimated by measuring the amount of plant material degraded by rumen microbes during in vitro incubation of the mirror section of the stained stem. The brown color produced and quantified by image analysis yields a parameter which is more accurately related to digestibility and, consequently, animal performance than existing methods.

The present method is applicable to any forage. As used herein, "forage" means any plant stem material used to feed ruminants. Preferably, the present method is applicable to maize, sorghum, grasses and legumes. More preferably, the present method is applicable to maize.

As used herein, "legume" means any plant fixing soil nitrogen by means of root nodules.

As used herein, "grass" means any perennial or annual, cool season, seed forming plant. Grasses are sod forming, from rhizomes or by tillering.

The present invention is particularly useful when the tissue has a high level of parenchymal cells. The ROR is highly correlated with the availability of cell-wall carbohydrates. As used herein, "rich in parenchymal cells" means about 60% or more of the total cell mass excluding the lumen in hollow stem tissue is parenchyma.

The sampling position can be at any internode of the stem. A skilled artisan can readily anticipate such position. In maize, the internode at the point of ear attachment, or one or two internodes below is preferred. Most preferably, the position is at the point of ear attachment. The first internode above the soil and all internodes above the ear can also be used.

The most preferred location within an individual internode is the geometric center of the internode. As used herein, "geometric center" means equidistant from the upper and lower node.

Sampling can occur at any time during the plant maturity cycle. However, a preferred time is 30 to 45 days post-flowering, when most differentiation among germplasm occurs.

The most preferred stain is acidified phloroglucinol, (1% solution in 20% HCl). However, equivalent stains may also be utilized.

The foregoing is one description of the scope of the invention and a skilled artisan will recognize many other examples of plant improvement to which the invention can be applied.

The present invention can be better understood by reference to the following more detailed example which illustrates its various applications, but is in no way intended to limit the scope thereof.

### EXAMPLE I

A 5 mm cross section of the stem is cut at a given internode. The other side of the cut is referred to as its mirrored section. One section is placed in a petri dish and covered with a 1% solution of phloroglucinol in about 20% HCl. The section is removed after about 15 minutes. It is placed on a slide and photographed. A reflex camera, equipped with a 70-210 mm lens. A 4x close-up is obtained, illuminating with a cold light on a green background. The image obtained is digitized and placed on a computer screen for quantitative analysis.

In vitro analysis is conducted on the mirror section of the cross section of the stem. The unstained mirrored section is incubated in rumen fluid, maintained at a constant temperature of 39°C, pH of 6.4-6.7 and in an anaerobic environment. After 24 hours of incubation, the section is removed and examined under a microscope and by image analysis.

### Example II

Maize stems are analyzed using the methods of the present invention. Maize stems are harvested at the physiological stage between the milky and silage stage. The leaves, leaf sheaths and cob are removed. The third internode is used. The first internode is defined as the first fully exposed internode above the soil surface. The third internode is cut from the stem and is used immediately. It can also be stored wrapped in plastic bags in a refrigerator for up to 24 hours.

One transverse stem section of 5 mm thickness of the internode is cut out of the middle of the internode by marking the center of the internode (half length of the internode) by using a ruler. The internode is cut transversely into two halves with a razor-saw 5 mm beside the marked center. The 5 mm stem section is dissected from the longer half of the internode by using a sharp instrument to achieve an entirely smooth surface.

1 g of phloroglucinol (1,3,5 trihydroxybenzene) is used in 100 ml HCl (20%) to stain the sample. The staining solution is not stored or used for more than 12 hours. The solution is saturated at room temperature. The stem sections are allowed to swim, smooth side downward, in phloroglucinol/HCl for 15 minutes. The stem sections are then rinsed quickly with distilled water. To avoid reflections on the stained stem sections, water droplets are removed with blotting paper. Photographs of stained sections are taken immediately.

A reflex camera, Nikon F-301, equipped with a zoom macro lens and a close-up (4x) lens is used to provide images of the object that fully uses the image format. AGFA ct 100i color slide film is used. Two cold light sources (SCHOTT, KL1500) are used to illuminate against a table covered with light green paper. The time of exposure is 1/60 second.

The slides of stained stem cross sections are projected on a screen by a slide projector. A three color tube TV camera (JVCBY110) is used to split the images into red, blue and green. The images are then transferred to a digital image processing system to ensure uniform illumination during captioning of the slides the camera, slide projector and screen are shielded from external light by a projection tube 50 cm x 50 cm x 150 cm.

For evaluation of the images, a red-green-blue ("RGB") - capable image processing system that includes the measure of geometric parameters, stem cross-section area and diameter, is used. The image analysis processing system IBAS 2000 (Zeiss/Kontron) is used based on grey value discrimination by a defined grey value threshold between object and background.

A color image processing system on PC basis (Epson AX3, digitized board Matrox PIP-1024) is used to extract the area of differently stained tissues within a stem cross section using the procedure of color classification. Digitized images are made up by 512 x 512 pixels. The grey value of each pixel is defined in a range between 0 (black) and 255 (white). The digitized image is handled and processed over the three single images provided by three RGB signals of the TV camera.

The invention is not limited to the exact details shown and described, for it should be understood that many variations and modifications may be made while remaining within the spirit and scope of the invention defined by the claims.

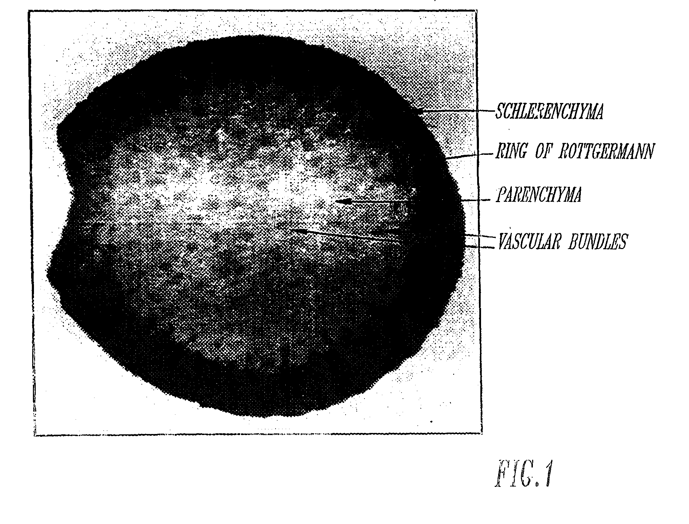

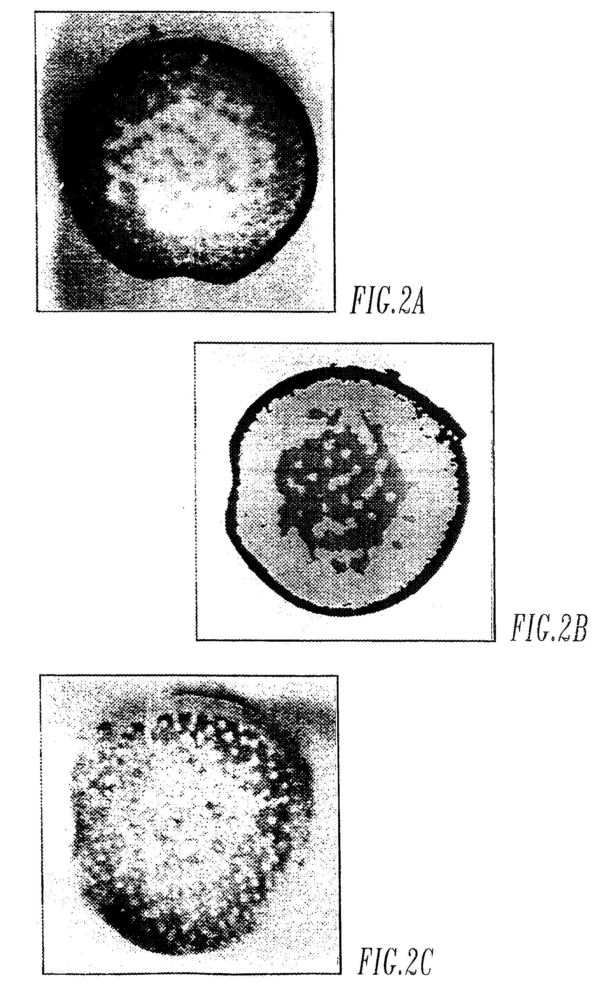

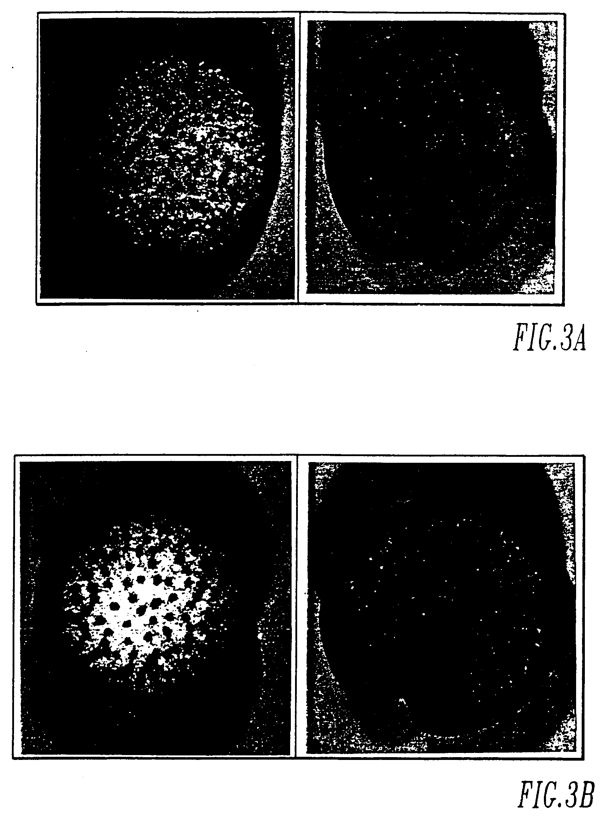

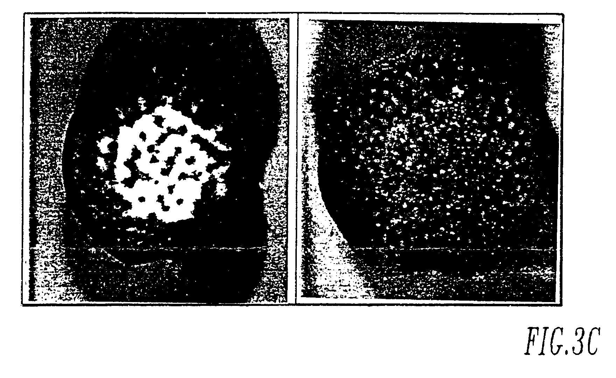

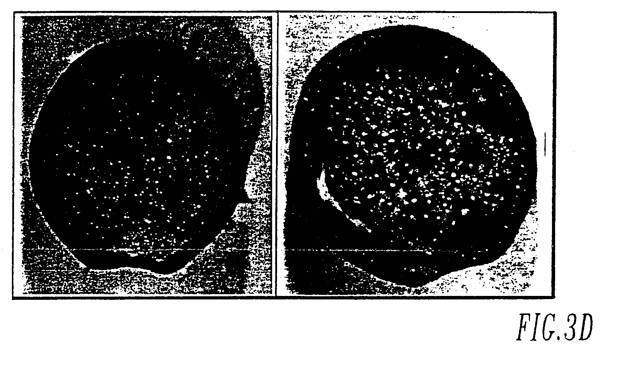

## Claims

1. A method for quantifying the distribution of complex cell wall carbohydrates in forage comprising the steps of:
a) staining a sample of the stem with a stain specific for linkages within the cell wall carbohydrates; and
b) analyzing the stained sample using image analysis to locate sections of the sample producing a brown region and determining the percentage area of brown region to quantify the distribution of complex cell wall carbohydrates in forage.

2. The method of claim 1 wherein the stain utilized is acidified phloroglucinol.

3. The method of claim 2 wherein the forage material is selected from maize, sorghum, grasses and legumes.

4. The method of claim 3 wherein the forage material is rich in parenchymal cells.

5. The method of claim 4 wherein the forage material is maize.

6. The method of any one of claims 1, 2, 3, 4 or 5 further comprising correlating the percentage area of the brown region with digestibility of the forage to predict the digestibility of forage material.

7. The method of any one of claims 1, 2, 3, 4 or 5 further comprising correlating the percentage area of the brown region with animal performance to predict animal performance.

8. The method of any one of claims 1, 2, 3, 4 or 5 further comprising correlating the percentage area of the brown region with cell wall maturity to determine cell wall maturity in an unknown sample.

## Patentansprüche

1. Verfahren zur Quantifizierung der Verteilung von komplexen Zellwandkohlenhydraten in Futter, umfassend die Schritte:
a) Färben einer Stengelprobe mit einem für Bindungen zwischen den Zellwandkohlenhydraten spezifischen Färbemittel; und
b) Analysieren der gefärbten Probe unter Verwendung der Bildanalyse, um Abschnitte der Probe zu lokalisieren, die eine braune Region bilden, und Bestimmen der prozentualen Fläche der braunen Region, um die Verteilung von komplexen Zellwandkohlenhydraten in Futter zu quantifizieren.

2. Verfahren nach Anspruch 1, wobei das verwendete Färbemittel angesäuertes Phloroglucinol ist.

3. Verfahren nach Anspruch 2, wobei das Futtermaterial ausgewählt ist aus Mais, Sorghum, Gräsern und Leguminosen.

4. Verfahren nach Anspruch 3, wobei das Futtermaterial reich an parenchymalen Zellen ist.

5. Verfahren nach Anspruch 4, wobei das Futtermaterial Mais ist.

6. Verfahren nach einem der Ansprüche 1, 2, 3, 4 oder 5, weiterhin umfassend das Inbeziehungsetzen der prozentualen Fläche der braunen Region mit der Verdaulichkeit des Futters, um die Verdaulichkeit des Futtermaterials vorherzusagen.

7. Verfahren nach einem der Ansprüche 1, 2, 3, 4 oder 5, weiterhin umfassend das Inbeziehungsetzen der prozentualen Fläche der braunen Region mit tierischer Leistungsfähigkeit, um tierische Leistungsfähigkeit vorherzusagen.

8. Verfahren nach einem der Ansprüche 1, 2, 3, 4 oder 5, weiterhin umfassend das Inbeziehungsetzen der prozentualen Fläche der braunen Region mit der Reife der Zellwand, um die Reife der Zellwand in einer unbekannten Probe zu bestimmen.

## Revendications

1. Procédé pour quantifier la répartition des hydrates de carbone complexes de parois cellulaires dans le fourrage, comprenant les étapes consistant à:
a) colorer un échantillon de la tige avec un colorant spécifique des liaisons dans les glucides des parois cellulaires; et
b) analyser l'échantillon coloré en utilisant une analyse d'image pour localiser des parties de l'échantillon produisant une zone brune et déterminer le pourcentage de surface occupé par la zone brune pour quantifier la répartition des hydrates de carbone complexes de parois cellulaires dans le fourrage.

2. Procédé selon la revendication 1, dans lequel le colorant utilisé est du phloroglucinol acidifié.

3. Procédé selon la revendication 2, dans lequel l'aliment fourrager est choisi parmi le maïs, le sorgho, les graminées et les légumineuses.

4. Procédé selon la revendication 3, dans lequel l'aliment fourrager est riche en cellules du parenchyme.

5. Procédé selon la revendication 4, dans lequel l'aliment fourrager est du maïs.

6. Procédé selon l'une quelconque des revendications 1, 2, 3, 4 ou 5, comprenant en outre l'étape consistant à établir une corrélation entre le pourcentage de surface occupé par la zone brune et la digestibilité du fourrage pour évaluer la digestibilité de l'aliment fourrager.

7. Procédé selon l'une quelconque des revendications 1, 2, 3, 4 ou 5, comprenant en outre l'étape consistant à établir une corrélation entre le pourcentage de surface occupé par la zone brune et les performances des animaux pour évaluer les performances des animaux.

8. Procédé selon l'une quelconque des revendications 1, 2, 3, 4 ou 5, comprenant en outre l'étape consistant à établir une corrélation entre le pourcentage de surface occupé par la zone brune et la maturité des parois cellulaires pour déterminer la maturité des parois cellulaires dans un échantillon inconnu.
